Europäisches Patentamt

**European Patent Office**

**Office européen des brevets**

(19)

(11) Veröffentlichungsnummer : **0 017 822**
**B1**

(12)

# EUROPÄISCHE PATENTSCHRIFT

(45) Veröffentlichungstag der Patentschrift :
11.08.82

(21) Anmeldenummer : 80101632.0

(22) Anmeldetag : 27.03.80

(51) Int. Cl.³ : **G 01 J   4/00**

(54) **Vorrichtung zur Analyse des Polarisationszustandes einer Strahlung.**

(30) Priorität : 21.04.79 DE 2916202

(43) Veröffentlichungstag der Anmeldung :
29.10.80 (Patentblatt 80/22)

(45) Bekanntmachung des Hinweises auf die Patenterteilung : 11.08.82 Patentblatt 82/32

(84) Benannte Vertragsstaaten :
DE FR GB

(56) Entgegenhaltungen :
US A 3 700 334
US A 4 105 335

NOUVELLE REVUE D'OPTIQUE APPLIQUÉE Band 4, Nr. 5, November-Dezember 1973 PARIS (FR) S. FRANCKH et al. : « Mesure et calcul de la phase du contraste des franges d'interférences à deux ondes en fonction de l'état de polarisation », Seiten 257-266

JOURNAL OF PHYSICS E : SCIENTIFIC INSTRUMENTS, Band 6, Nr. 9, September 1973 LONDON (GB) H. HAZEBROEK et al. : « Interferometric ellipsometry », Seiten 822-826

JOURNAL OF PHYSICS E : SCIENTIFIC INSTRUMENTS, Band 11, Nr. 9, September 1978 LONDON (GB) H. ROSEN et al. : « Interferometric determination of ellipsometric parameters » Seiten 905-908

(73) Patentinhaber : International Business Machines Corporation
Armonk, N.Y. 10504 (US)

(72) Erfinder : Korth, Hans-Erdmann
Sandberger Strasse 34
D-7000 Stuttgart (DE)
Erfinder : Schedewie, Franz, Dr.
Schurwaldstrasse 18
D-7030 Böblingen (DE)

(74) Vertreter : Teufel, Fritz, Dipl.-Phys.
Schönaicher Strasse 220
D-7030 Böblingen (DE)

Imprimerie Jouve, 18, rue St-Denis, 75001 Paris, France

Vorrichtung zur Analyse des Polarisationszustandes einer Strahlung

Die Erfindung betrifft Vorrichtungen zur Analyse des Polarisationszustandes (Polarisationsrichtung und Elliptizität), einer Strahlung ; diese sind in besonders vorteilhafter Weise zur Schichtdickenmessung von dünnen Schichten zu verwenden.

Auf vielen Gebieten der Wissenschaft und der Technik werden in ständig zunehmendem Umfang polarisationsoptische Verfahren und Vorrichtungen eingesetzt, bei denen in der Mehrzahl aller Fälle die Bestimmung des Polarisationszustandes, d.h. der Elliptizität und der Polarisationsrichtung einer Strahlung mit möglichst großer Genauigkeit vorgenommen werden muß.

Das übliche, beispielsweise in « Optik und Atomphysik » von R. W. Pohl, Springer, 1976, Seiten 121 und 122 beschriebene Verfahren besteht darin, daß die zu analysierende Strahlung einem rotierenden Analysator zugeführt und die Intensität der durchgelassenen Strahlung mit einem Lichtdetektor und einem Voltmeter gemessen und als Funktion der jeweiligen Drehlage des Analysators aufgetragen wird.

Abgesehen davon, daß dieses Verfahren sehr umständlich ist und viel Zeit beansprucht, ist das Maximum und das Minimum der von einem Analysator durchgelassenen Intensität relativ flach und daher nur mit einer für die meisten Anwendungen zu geringen Genauigkeit feststellbar. Deshalb wurde schon vorgeschlagen, schnell rotierende und mit Winkelcodierern verbundene Analysatoren zu verwenden und die elektrischen Ausgangssignale der nachgeschalteten Lichtdetektoren gemeinsam mit den an den Ausgängen der Winkelcodierer auftretenden elektrischen Signalen einem Computer zur Berechnung der Fourierkoeffizienten zuzuführen. Zur Erhöhung der Genauigkeit hat es sich als vorteilhaft erwiesen, diesen Vorgang für eine größere Anzahl von Umdrehungen des Analysators durchzuführen und aus den erhaltenen Ergebnissen einen Mittelwert zu bilden.

Abgesehen vom hohen technischen Aufwand und der durch die schnell rotierenden Elemente bedingten Stör- und Fehleranfälligkeit haben diese Vorrichtungen noch den Nachteil, daß die beispielsweise für eine ellipsometrische Schichtdickenmessung erforderliche Zeit trotz sehr schnell rotierender Analysatoren und dem Einsatz modernster Computer so lang ist, daß eine Messung dynamisch beanspruchter oder Vibrationen ausgesetzter Objekte nicht möglich ist. Das gleiche gilt auch für die in der DE-OS 26 16 141 beschriebene Vorrichtung, bei der anstelle eines rotierenden Analysators ein rotierender Kompensator, beispielsweise ein rotierendes λ/4-Plättchen vorgesehen ist.

Bei der in der Literaturstelle « Simulation of Mechanical Rotation by Optical Rotation : Application to the Design of a New Fourier Photopolarimeter » J. Opt. Soc. Am., Vol. 68, No. 4, April 1978, Seiten 518 bis 521, beschriebenen Vorrichtung werden die bei den bisher bekannten Ellipsometern verwendeten rotierenden Analysatoren oder Kompensatoren durch elektro-optische oder magneto-optische Mittel zur Drehung der Polarisationsebene ersetzt. Abgesehen von dem komplizierten Aufbau und der damit verbundenen Störanfälligkeit dieser Vorrichtungen sowie der umständlichen und zeitraubenden mathematischen Auswertung der Ergebnisse weisen derartige Vorrichtungen noch den Nachteil auf, daß ihr Auflösungsvermögen durch die mit jedem elektro-optischen oder magneto-optischen Rotator verbundenen Fehler schlechter als das Auflösungsvermögen von Ellipsometern mit rotierenden Elementen ist.

Aus der US-Patentschrift 4 105 335 ist eine interferometrische Anordnung zur optischen Phasendiskrimination bekannt, bei der zur Messung der Dicke dünner Schichten das Interferenzfeld ausgewertet wird, das entsteht, wenn die an Vorder- bzw. Rückseite der Schicht reflektierte Strahlung in zwei einen spitzen Winkel miteinander einschließende und senkrecht zueinander polarisierte Komponenten zerlegt wird. Die Auswertung beschränkt sich jedoch auf einen speziellen Aspekt des Interferenzfeldes (Abstand Spitze-Spitze) und erlaubt keine Aussage über den Polarisationszustand der gesamten interferierenden Strahlung.

Aus dem Artikel « Mesure et calcul de la phase et du contraste des franges d'interférences à deux ondes en fonction de l'état de polarisation de la lumière incidente » von S. Franckh und K. Leonhardt in Nouv. Rev. Optique, 1973, Band 4, Nr. 5, Seite 257 bis 266 wird auf den Zusammenhang zwischen dem Polarisationszustand einer in ein Interferometer eindringenden Strahlung und den Parametern des entstehenden Interferenzfeldes (Modulation, mittlere Intensität usw.) hingewiesen ; das dort vorgeschlagene Interferometer zeigt jedoch einen komplexen Aufbau, ist schwer zu justieren und daher für praktische Zwecke nur wenig geeignet.

Die Erfindung geht von der Aufgabe aus, Vorrichtungen zur Analyse des Polarisationszustandes, d.h. der Elliptizität und der Polarisationsrichtung einer Strahlung anzugeben, mit denen ohne bewegte Elemente, mit geringem technischen Aufwand, bei geringstem Raumbedarf und mit einem im Mikrosekundenbereich liegenden Zeitaufwand die Richtung und/oder die Elliptizität einer Strahlung mit einer Genauigkeit bestimmt werden kann, die bisher selbst mit wesentlich umfangreicheren, kostspieligeren und vor allem teureren Vorrichtungen nicht erreicht werden konnte. Diese Aufgabe wird durch die im Kennzeichen der Ansprüche 1 und 2 beschriebene Erfindung gelöst.

Gegenüber den bisher bekannten Vorrichtungen der oben genannten Art, bei denen vorwiegend die Intensität des von einem um eine parallel zur Fortpflanzungsrichtung einer einen stationären Polarisationszustand aufweisenden Strahlung liegenden Achse rotierenden Analysator durchgelassenen Anteils oder die Intensität des von einem stationären Analysator durchgelassenen Anteils einer Strahlung, deren Polarisationsrichtung durch elektrooptische oder elektromagnetische Rotatoren gedreht wird, als Funktion der Relativlage zwischen der Polarisationsrichtung der zu untersuchenden Strahlung und der Durchlaßrichtung des verwendeten Analysators ausgewertet wird, haben die Vorrichtungen nach der vorliegenden Erfindung den Vorteil, daß zur Bestimmung der Polarisationsrichtung nur der Modulationskontrast und zur Bestimmung der Elliptizität nur die Phasenlage eines in ganz bestimmter Weise erzeugten Interferenzstreifenmusters bestimmt werden muß, was beispielsweise mit Hilfe einer selbstabtastenden eindimensionalen Photodiodenanordnung (photo diode array) oder mit fernsehtechnischen Mitteln durchgeführt werden kann.

Die periodische Intensitätsverteilung hinter dem Analysator wird nämlich durch drei Bestimmungsgrößen vollständig beschrieben, die in einfacher Weise den kennzeichnenden Parametern von elliptisch polarisiertem Licht zugeordnet sind. Diese Parameter sind die Amplituden der senkrecht zueinander polarisierten Komponenten und ihre relativen Phasen. Ist $A_y$ die Amplitude der in y-Richtung polarisierten Komponente, so hat ihre Vektorkomponente parallel zur Analysatorachse die Größe $A_y \sin \beta$, wenn $\beta$ der Winkel zwischen beiden Richtungen ist. Entsprechend ist die Vektorkomponente der in x-Richtung polariserten Komponente $A_x \cos \beta$. Maximale bzw. minimale Intensitäten ergeben sich, wenn sich aufgrund der Phasenlage die Amplituden gerade addieren bzw. subtrahieren. Ebenso ist einleuchtend, daß eine Phasendifferenz als Funktion der Zeit zwischen den Wellen $A_y$ und $A_x$ sich in einer Phasenverschiebung der örtlich variierenden periodischen Intensitätsverteilung wiederspiegelt. Da der Modulationskontrast

$$K = \frac{J_{max} - J_{min}}{J_{max} + J_{min}}$$

und

$$J_{max} = (A_x + A_y)^2$$
$$J_{min} = (A_x - A_y)^2$$
$$J_{max} - J_{min} = 4A_xA_y$$
$$J_{max} + J_{min} = 2A_x^2 + 2A_y^2$$

ist

$$K = \frac{2A_x \cdot A_y}{A_x^2 + A_y^2}$$

$$= \frac{2A_x/A_y}{A_x^2/A_y^2 + 1}$$

$$= \frac{2}{A_x/A_y + A_y/A_x}$$

was bedeutet, daß das Verhältnis der Amplituden $A_x/A_y$, und damit die Polarisationsrichtung, eine eindeutige Funktion des Kontrastes ist.

Da zur Herstellung einer erfindungsgemäßen Vorrichtung Wollaston-Prismen, Analysatoren und ein Photodioden-Array genügen, die in geringem Abstand voneinander angeordnet und daher miteinander verkittet oder in einer anderen Weise starr miteinander verbunden sein können, ergeben sich wesentlich kleinere, einfachere, billigere und weitaus weniger störanfällige Einheiten als alle bisher bekannten Vorrichtungen der oben genannten Art mit einer auch nur vergleichbaren Meßgenauigkeit.

Ausführungsbeispiele der Erfindung werden anschließend anhand der Figuren näher erläutert.
Es zeigen:
Figur 1 die schematische Darstellung einer erfindungsgemäß ausgebildeten Vorrichtung zur Analyse des Polarisationszustandes einer Strahlung;
Figur 2 eine der Erläuterung des Ausführungsbeispiels nach Fig. 3 dienende Anordnung;
Figur 3 ein weiteres Ausführungsbeispiel der Erfindung.

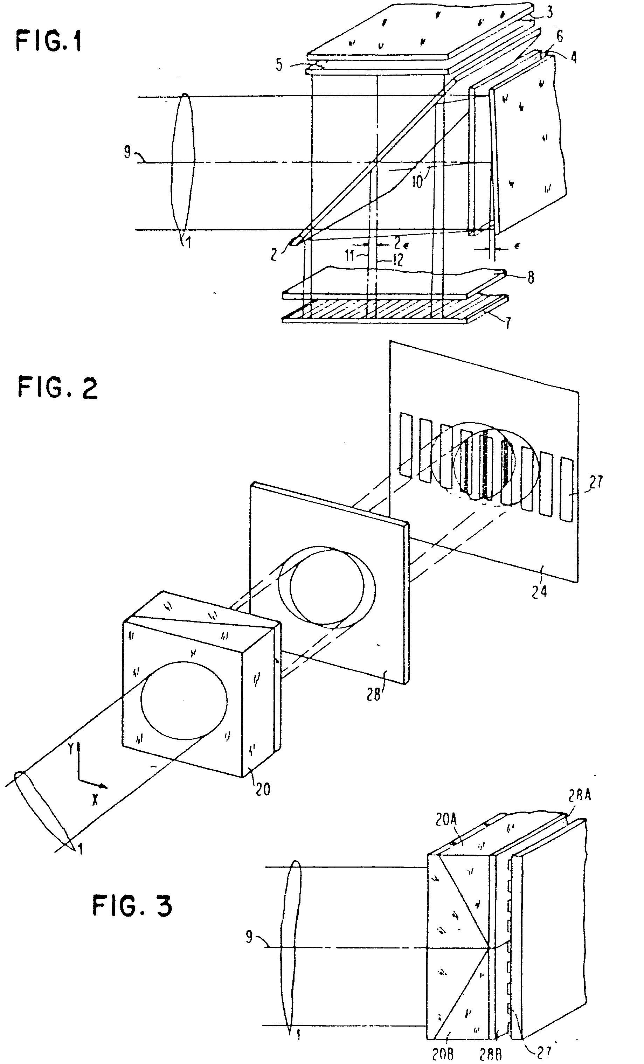

Die in Fig. 1 dargestellte Vorrichtung besteht aus einem polarisierenden Strahlenteiler 2, zwei einen geringfügig von 90° abweichenden Winkel einschließenden reflektierenden Flächen 3 und 4, zwei $\lambda/4$-Plättchen 5 und 6, einer eindimensionalen Photodiodenanordnung 7 und einem zwischen dem polarisierenden Strahlenteiler und der Photodiodenanordnung angeordneten Analysator 8, dessen Durchlaßrichtung den durch die Polarisationsrichtungen der beiden auf ihn auftreffenden Strahlungskomponenten gebildeten Winkel halbiert.

Die Senkrechte auf der reflektierenden Fläche 3 schließt mit der reflektierenden Fläche 4 einen kleinen Winkel $\varepsilon$ ein, so daß die an der Fläche 3 reflektierte Komponente mit der an der Fläche 4 und dem Strahlenteiler 2 reflektierte Komponente den Winkel $2\varepsilon$ einschließen.

Da der Analysator 8 von den am Strahlenteiler 2 reflektierten bzw. durchgelassenen senkrecht zu einander polarisierten Strahlungskomponenten nur jeweils den in seiner Durchlaßrichtung polarisierten Bruchteil durchläßt, kann zur Photodiodenanordnung 7 nur miteinander voll interferenzfähige Strahlung gelangen.

Zur Erläuterung der Wirkungsweise der Vorrichtung werden zunächst folgende Annahmen gemacht: die zu analysierende Strahlung 1 ist in einer mit der Zeichnungsebene einen Winkel von 45° einschließenden Richtung linear polarisiert. Dann werden am entsprechend ausgerichteten polarisierenden Strahlenteiler 2, der beispielsweise aus einer mit mehreren dünnen Schichten überzogenen Glasplatte bestehen kann, 50 % der Strahlung in Richtung der Fläche 3 reflektiert, während 50 % der Strahlung durch den Strahlenteiler hindurchtritt und zur Fläche 4 gelangt. Da die an den Flächen 3 und 4 reflektierten Strahlungskomponenten die $\lambda/4$-Plättchen 5 bzw.

6 jeweils zweimal durchsetzen, werden ihre Polarisationsrichtungen jeweils um 90° gedreht, so daß die an der Fläche 3 reflektierte Komponente den polarisierenden Strahlenteiler 2 zu 100 Prozent durchsetzt, während die an der Fläche 4 reflektierte Strahlungskomponente zu 100 Prozent am polarisierenden Strahlenteiler in Richtung der Photodiodenanordnung 7 reflektiert wird. Da die reflektierenden Flächen 3 und 4 nicht zueinander senkrecht liegen, was zu einer homogenen Helligkeitsverteilung auf der Oberfläche der Photodiodenanordnung 7 führen würde, sind die optischen Weglängen dieser Komponenten mit von rechts nach links wachsender Differenz verschieden, so daß ein Interferenzstreifenfeld mit maximalem Kontrast entsteht.

Bei Übergang des oben genannten Verhältnisses von 50 : 50 % zu Verhältnissen von 100 : 0 % bzw. 0 : 100 %, bei dem die Polarisationsrichtung der einfallenden Strahlung 1 entweder in die Zeichnungsebene oder in die Richtung senkrecht zur Zeichnungsebene gedreht ist, wird der beim Verhältnis 50 : 50 % maximale Modulationskontrast immer schlechter, um beim Erreichen der Verhältnisse von 100 : 0 % oder 0 : 100 % vollkommen zu verschwinden. Es hat sich, wie oben dargelegt, gezeigt, daß zwischen der Lage der Polarisationsebene der Strahlung 1 und dem Modulationskontrast sowie zwischen der Elliptizität der Strahlung und der Phasenlage des Interferenzlinienfeldes im Bereich der Photodiodenanordnung 7 eine eindeutige Korrelation besteht.

Weist die zu untersuchende Strahlung eine elliptische Polarisation auf, so kann sie bekanntlich als aus zwei in verschiedenen Richtungen und mit verschiedenen Amplituden linear polarisierten Komponenten zusammengesetzt gedacht sein, die, da ihre Kombination einen eine Schraubenlinie beschreibenden Vektor erzeugt, verschiedene Phasenlagen haben. Da diese Phasendifferenz, wie aus der klassischen Physik bekannt, eine eindeutige Funktion der Elliptizität der Strahlung ist, wird die Phasenlage des auf der Photodiodenanordnung 7 erzeugten Interferenzstreifenmusters eine eindeutige Funktion der Elliptizität der zu untersuchenden Strahlung sein. Die bei der Analyse einer bestimmten Strahlung an den Ausgängen der die Photodiodenanordnung 7 bildenden Photodioden auftretenden elektrischen Signale enthalten daher eine eindeutige Information sowohl über die Polarisationsrichtung als auch die Elliptizität der zu analysierenden Strahlung 1. Die Auswertung dieser Signale kann mit an sich bekannten Analog- oder Digitalverfahren erfolgen.

Insbesondere die Analogverarbeitung kann in besonders einfacher Weise durchgeführt werden, da der Modulationskontrast, und die Phasenlage des Interferenzstreifenmusters durch Verarbeitung der elektrischen Signale mit einfachen Schaltungen unmittelbar in diesen Werten proportionale Gleichspannungen umgewandelt werden kann.

Die in Fig. 2 dargestellte Anordnung, die dem Analyseteil der Anordnung nach US-P 4 105 335 entspricht, besteht aus einem Wollaston-Prisma 20, einem Analysator 28 und einer in einer Auswertebene 24 angeordneten Photodiodenanordnung 27. Eine zu analysierende Strahlung 1 wird beim Durchtritt durch das Wollaston-Prisma 20 in zwei zueinander senkrecht linear polarisierte Strahlen aufgespalten, die einen kleinen Winkel miteinander einschließen und eine ortsabhängige Phasenverschiebung aufweisen. Wie ohne weiteres einzusehen, ist die Differenz der Phasenlagen dieser beiden Strahlen eine Funktion ihres Abstandes von der linken bzw. rechten Kante des Wollaston-Prismas 20. Der hinter dem Wollaston-Prisma angeordnete Analysator 28, dessen Polarisationsachse beispielsweise um 45° gegenüber den Polarisationsrichtungen der beiden senkrecht zueinander polarisierten Strahlen geneigt ist, erzeugt immer dann eine periodische Intensitätsverteilung, wenn die einfallende Strahlung wenigstens teilweise polarisiert ist und eine Komponente parallel zur Analysatorachse besitzt. Die Periodizität der Intensitätsverteilung, die in der Regel aus einem in der Auswertebene 24 auftretenden Interferenzstreifenmuster besteht, ist proportional zur Wellenlänge des benutzten Lichtes und umgekehrt proportional zum Sinus des Aufspaltwinkels des Wollaston-Prismas.

Diese Intensitätsverteilung wird mit der in der Ebene 24 angeordneten eindimensionalen Photodiodenanordnung 27 erfaßt und anschließend zur Auswertung entweder geeigneten Analogschaltungen oder einem Rechner zugeführt. Die Photodiodenanordung 27 ist vorzugsweise als « selbstabtastendes Photodioden-Array » ausgebildet, da derartige Vorrichtungen in vielfachen Ausführungen im Handel erhältlich, billig, wenig störanfällig und leicht auszuwerten sind. Anstelle der Photodiodenanordnung kann beispielsweise eine normale Fernsehkamera, eine Einzeilenfernsehkamera oder ein mit einem Schwingspiegel versehener Lichtdetektor verwendet werden.

Die periodische Intensitätsverteilung hinter dem Analysator wird durch drei Bestimmungsgrößen vollständig beschrieben. Diese drei Bestimmungsgrößen sind die Maximalamplitude, die Minimalamplitude und die Phasenlage der Intensitätsverteilung. Anstelle von Maximal- und Minimalamplitude kann man ebensogut die abgeleiteten Größen Modulationskontrast und Mittelwert setzen. Diese Bestimmungsgrößen sind in einfacher Weise den kennzeichnenden Parametern von elliptisch polarisiertem Licht zugeordnet, nämlich den Amplituden der senkrecht zueinander polarisierten Teilwellen und ihrer relativen Phase. Ist $A_y$ die Amplitude der in y-Richtung polarisierten Teilwelle, so hat ihre Vektorkomponente parallel zur Analysatorachse die Größe $A_y \sin \beta$, wobei $\beta$ der Winkel zwischen der Analysatorachse und der Polarisationsrichtung der Teilwelle ist. Entsprechend ist die Vektorkomponente der in x-Richtung polarisierten Teilwelle $A_x \cos \beta$. Maximale bzw. minimale Intensität ergeben sich, wenn sich aufgrund der Phasenlage diese Amplituden gerade addieren bzw. subtrahieren. Ebenso ist einleuchtend, daß eine Phasendifferenz als Funktion der Zeit zwischen den Wellen $A_y$ und $A_x$ sich in einer Phasenverschiebung der örtlich variierenden periodischen Intensitätsverteilung wiederspiegelt.

Werden Meßergebnisse gefordert, die ohne Interpretation und ohne Berücksichtigung von Randbedingungen eindeutige Aussagen über Polarisationsrichtung und Elliptizität zulassen, so kann anstelle der oben beschriebenen Vorrichtung mit nur einem Wollaston-Prisma und einem Analysator, bei der die Zuordnung der gemessenen Amplituden zur x-Richtung bzw. y-Richtung, wie auch vom Ellipsometer bekannt, nicht eindeutig ist, eine Vorrichtung gewählt werden, die durch Hinzufügen eines weiteren Detektors erhalten wird, der die Intensität in einer der Polarisationsrichtungen zusätzlich mißt. Besonders vorteilhaft ist jedoch die in Fig. 3 dargestellte Vorrichtung, die aus zwei gegenläufig zueinander angeordneten Wollaston-Prismen 20A und 20B und zwei dahinter angeordneten Analysatoren 28A und 28B besteht, deren Polarisationsachsen mit den Polarisationsachsen jeweils einer der von beiden Wollaston-Prismen erzeugten linear polarisierten Komponenten Winkel von 30° bzw. 60° oder andere, vorzugsweise zu 45° symmetrisch liegende Winkel bilden. Die Analysatoren sind vorzugsweise mit den Wollaston-Prismen und der dahinter angeordneten Vielfachdiodenanordnung 27 zu einer einzigen Einheit zusammengekittet oder sonstwie miteinander verbunden. Die Funktion der Vorrichtung ergibt sich aus den Beschreibungen der Fign. 1 und 2. Tritt bei dieser Vorrichtung im einfallenden Strahl durch Änderung der Elliptizität eine Phasenverschiebung über den ganzen Strahlquerschnitt auf, so bewegen sich die auf der Photodiodenanordnung 27 entstehenden Interferenzstreifenmuster gegeneinander. Ändert sich jedoch die Einfallsrichtung in der Aufspaltebene, so verschieben sich die Streifen unabhängig von Änderungen der Elliptizität in der gleichen Richtung. Phasenlage und Einfallsrichtung können so beide unabhängig voneinander bestimmt werden. Der Aufspaltwinkel der Wollaston-Prismen wird zweckmäßigerweise so gewählt, daß beide Streifensysteme je etwa 2 bis 3 Perioden umfassen. Die Einhüllende der Maxima und Minima läßt sich dann leicht errechnen oder durch eine Analogmethode erfassen, so daß z.B. der Einfluß der Beleuchtung mit einem « Gauß-förmigen » Laserstrahl kompensiert werden kann.

Im Vergleich zu bei herkömmlichen Ellipsometern verwendeten Vorrichtungen zur Ermittlung des Polarisationszustandes ist die Justierung der beschriebenen Vorrichtung äußerst einfach.

Die beiden Wollaston-Prismen 20A und 20B werden zwischen gekreuzten Polarisatoren auf Parallelität justiert. Die geteilten Analysatoren werden auf einen Achsenwinkel von 90° zueinander ausgerichtet. Wollaston-Prismen und Polarisatoren werden anschließend z.B. mit linear polarisiertem Licht beleuchtet und gegebenenfalls unter Rechnerkontrolle justiert. Dabei braucht die Polarisationsrichtung der Beleuchtung nicht bekannt zu sein. Wollastom-Prismen, Analysatoren und Photodiodenanordnung können nach der Justage in unmittelbarem Kontakt miteinander, vorzugsweise durch Verkitten, fixiert werden. Auf diese Weise läßt sich die ganze Vorrichtung in einem Volumen von wenigen cm$^3$ unterbringen.

## Ansprüche

1. Vorrichtung zur Analyse des Polarisationszustands, d.h. der Polarisationsrichtung und der Elliptizität, einer Strahlung, gekennzeichnet durch einen polarisierenden Strahlenteiler (2), der einen Teil der zu analysierenden Strahlung über ein λ/4-Plättchen (5) auf eine reflektierende Fläche (3) reflektiert und einen anderen Teil der Strahlung über ein weiteres λ/4-Plättchen (6) auf eine zweite reflektierende Fläche (4) richtet, die mit der ersten reflektierenden Fläche einen geringfügig von 90° abweichenden Winkel einschließt, einen im Strahlengang der an den reflektierenden Flächen (3, 4) reflektierten und den polarisierenden Strahlenteiler (2) durchsetzenden bzw. an diesem reflektierten Strahlungskomponenten angeordneten Analysator (8), dessen Durchlaßrichtung den durch die Polarisationsrichtungen der beiden senkrecht zueinander polarisierten Komponenten gebildeten Winkel halbiert, eine unterhalb des Analysators angeordnete ein dimensionale Lichtdetektoranordnung (7) zur Abtastung des entstehenden Interferenzfeldes und durch eine an die Lichtdetektoranordnung angeschlossene Auswerteschaltung zur Ermittlung des Polarisationszustands aus der Intensitätsverteilung auf der Lichtdetektoranordnung.

2. Vorrichtung zur Analyse des Polarisationszustandes, d.h. der Polarisationsrichtung und der Elliptizität, einer Strahlung, gekennzeichnet durch zwei gleiche nebeneinander, um 180° gegeneinander verdreht angeordnete Wollaston-Prismen (20A, 20B), zwei jeweils hinter einem der Wollaston-Prismen angeordnete Analysatoren (28A, 28B) deren Durchlaßrichtungen mit den Polarisationsrichtungen der von den beiden Wollaston-Prismen durchgelassenen Strahlenkomponenten Winkel von 30 bzw. 60° einschließen, eine dahinter angeordnete, lineare Lichtdetektoranordnung (27) zur Abtastung des entstehenden Interferenzfeldes und durch eine an die Lichtdetektoranordnung angeschlossene Auswerteschaltung zur Ermittlung des Polarisationszustandes aus der Intensitätsverteilung auf der Lichtdetektoranordnung.

3. Vorrichtung nach Anspruch 2, dadurch gekennzeichnet, daß die Wollaston-Prismen (20A, 20B), die Analysatoren (28A, 28B) und die Lichtdetektoranordnung (27) miteinander verbunden sind, beispielsweise durch Verkitten.

4. Vorrichtung nach einem der Ansprüche 1 bis 3, dadurch gekennzeichnet, daß die lineare Lichtdetektoranordnung (7 bzw. 27) als selbstabtastendes Photodioden-Array ausgebildet ist.

## Claims

1. Device for analyzing the state of polarization of a radiation, i.e. of the direction of polarization and of the ellipticity, characterized by a polarizing beam splitter (2) reflecting part of the radiation to be analyzed via a $\lambda/4$-plate (5) onto a reflecting surface (3), and directing another part of the radiation via a further $\lambda/4$-plate (6) onto a second reflecting surface (4) which with the first reflecting surface includes an angle slightly differing from 90°, by an analyzer (8) arranged in the beam path of the radiation components reflected from the reflecting surfaces (3, 4) and passing through the polarizing beam splitter (2), or being reflected thereby, respectively, said analyzer having a direction of transmission which halves the angle formed by the directions of polarization of the two components polarized vertically to each other, by a one-dimensional light detector arrangement (7) provided under the analyzer for scanning the formed interference field, and by an evaluator circuit connected to the light detector arrangement to determine the states of polarization from the intensity distribution on the light detector arrangement.

2. Device for analyzing the states of polarization of a radiation, i.e. of the direction of polarization and of the ellipticity, characterized by two equal Wollaston prisms (20A, 20B) arranged one beside the other and rotated by 180° relative to each other, two analyzers (28A, 28B) each provided behind one respective Wollaston prism whose transmission directions include angles of 30 and 60°, respectively, with the directions of polarization of the two beam components passing through the two Wollaston prisms, by a linear light detector arrangement (27) provided behind it for scanning the formed interference field, and by an evaluator circuit connected to the light detector arrangment for determining the state of polarization from the intensity distribution on the light detector arrangement.

3. Device as claimed in claim 2, characterized in that the Wollaston prisms (20A, 20B), the analyzers (28A, 28B), and the light detector arrangement (27) are interconnected, e.g. through cementing.

4. Device as claimed in any one of claims 1 to 3, characterized in that the linear light detector arrangement (7 and 27) is designed as a self-scanning photodiode array.

## Revendications

1. Dispositif pour analyser l'état de polarisation, c'est-à-dire la direction de polarisation et la forme elliptique, d'une radiation, caractérisé en ce qu'il comprend un diviseur de radiation polarisant (2) qui réfléchit une partie de la radiation à analyser à travers une plaque $\lambda/4$ (5) sur une surface réfléchissante (3) et une autre partie de la radiation à travers une autre plaque $\lambda/4$ (6) sur une seconde surface réfléchissante (4) qui forme avec la première surface réfléchissante un angle légèrement différent de 90°, un analyseur (8) disposé dans le trajet de rayonnement des composantes de radiation réfléchies par les surfaces réfléchissantes (3, 4) et passant à travers le diviseur de radiation polarisant (2) ou étant réfléchies par ce dernier, la direction de transmission dudit analyseur dissectant l'angle formé par les directions de polarisation des deux composantes polarisées verticalement l'une par rapport à l'autre, un ensemble de détection de lumière unidimensionnel (7) disposé en dessous de l'analyseur pour balayer le champ d'interférence en formation, et un circuit d'évaluation connecté à l'ensemble de détection de lumière pour détecter l'état de polarisation à partir de la distribution d'intensité sur l'ensemble de détection de lumière.

2. Dispositif pour analyser l'état de polarisation, c'est-à-dire la direction de polarisation et la forme elliptique d'une radiation, caractérisé en ce qu'il comporte deux prismes du type Wollaston (20A, 20B) identiques, disposés côte à côte et déphasés de 180°, deux analyseurs (28A, 28B) chacun d'eux étant disposé derrière l'un des prismes du type Wollaston dont les directions de transmission forment, avec les directions de polarisation des composantes de radiation ayant pu passer à travers les deux prismes du type Wollaston, un angle de 30 et 60° respectivement, et un ensemble de détection de lumière linéaire (27) disposé derrière lesdits analyseurs pour balayer le champ d'interférence en formation, et un circuit d'évaluation connecté à l'ensemble de détection de lumière pour détecter l'état de polarisation à partir de la distribution d'intensité sur l'ensemble de détection de lumière.

3. Dispositif selon la revendication 2, caractérisé en ce que les prismes du type Wollaston (20A, 20B), les analyseurs (28A, 28B) et l'ensemble de détection de lumière (27) sont interconnectés, par exemple par masticage.

4. Dispositif selon l'une des revendications 1 à 3, caractérisé en ce que l'ensemble de détection de lumière linéaire (7 ou 27) et constitué par un ensemble de photo-diodes à auto-balayage.

0 017 822

FIG.1

FIG. 2

FIG. 3